# EUROPEAN PATENT APPLICATION

(11) **EP 1 700 525 A2**
(43) Date of publication of application: **13.09.2006**
(21) Application number: 06001268.9
(22) Date of filing: 14.12.1998

(54) **Pungent flavor components**

(30) Priority: 22.12.1997 EP 97122633
(62) Divisional of application: 98123492.5
(71) Applicant: Givaudan SA, 1214 Vernier-Genève (CH)
(72) Inventor: Bachmann, Jean-Pierre, 8820 Wädenswil (CH); Gautschi, Markus, 4314 Zeiningen (CH); Hostettler, Bernhard, 8044 Gockhausen (CH); Yang, Xiaogen, West Chester Ohio 45069 (US)
(74) Representative: McStea, John Anthony

(57) **Abstract**

The invention is related to the use of 1'-acetoxychavicol acetate and 1'-acetoxyeugenol acetate and derivatives thereof as flavor or flavor component for exhibiting warm/hot, spicy and pungent sensations related to Galangal, a flavor composition containing at least one of the compounds and to food or a beverage or a healthcare product containing at least one of these compounds.

## Description

The invention is related to the use of 1'-acetoxychavicol acetate and 1'-acetoxyeugenol acetate and derivatives thereof as flavor or flavor component for exhibiting warm/hot, spicy and pungent sensations related to Galangal, a flavor composition containing at least one of these compounds and to food or a beverage or a healthcare product containing at least one of these compounds.

Hot Peppers like red pepper *(Capsicum annuum* L.) - in Europe also known as Paprika - and chili pepper *(Capsicum frutescens* L.) comprise an essential ingredient in a number of Asian and European cuisines. It is well known from Thresh et al., *Pharm. J. and Trans.* 1876, 7, 21; Micko et al., *Z. Nahr. Genussm*. 1898, *1*, 818 or A. Szallasi, P.M. Blumberg, *Adv. Pharmacol.* 1993, 24, 123 that Capsaicin is the active ingredient in hot peppers of the plant genus *Capsicum.* As mentioned by A. Szallasi, *Gen. Pharmac.* 1994, 25, 223 the oral consumption of hot peppers leads to profuse perspiration which ultimately leads to heat loss. This well established effect, which is known as gustatory sweating, is most probably the reason for the high popularity of hot peppers in countries with a hot climate, besides of flavoring the food.

Capsaicin is one of the most active members of a class of compounds commonly referred to as *capsaicinoids* , see J. Szolcsanyi in "*Handbook of Experimental Pharmacology*", A.S. Milton, Ed., Vol. 60, pp. 437-478, Springer, Berlin, 1982. Other well known compounds of this class are Piperine, the active ingredient in black pepper *(Piper nigrum* L.), see

Cazeneuve et al., *Bull. Soc. Chim. France.* 1877, *27*, 291, and Gingerol, the active ingredient in ginger *(Zingiber officinale R.).*

Galangal (also called galanga, galingale, galangale, calangall) is the name for a member of the monocotyledonus family *Zingiberacea. Alpinia officinarium,* the smaller Galangal, is native to southern China, while the greater galangal, *Alpinia galanga* or *Languas galanga,* is a larger plant of Java and Malaya. *Alpinia galanga* is a stemless perennial herb with fragrant short living flowers. The reddish-brown rhizomes of this plant having a spicy aroma and a pungent taste somewhere inbetween pepper and ginger are used as spice and especially as ginger substitute for flavoring foods, e.g. meat, rice or curry. Galangal oleoresin is used in flavors as a modifier for ginger, cardamom, allspice, nutmeg etc. with which it blends favorably. The oleoresin remains, however, a rarity and specialty, which is offered by flavor supply houses.

The compounds 1'-acetoxychavicol acetate and 1'-acetoxyeugenol acetate are known compounds. They have been isolated from *Alpinia Galanga* and are described to have anti-tumor activity (see H. Itokawa et al., *Planta Medica* 1987, 32-33), to inhibit xanthin oxidase (see T. Noro et al., *Chem. Pharm. Bull.* 1988, *36,* 244) and to have anti-fungal activity (see A.M. Janssen et al., *Planta Medica* 1985, 507). Furthermore, 1'-acetoxychavicol acetate is described to have anti-ulcer activity (see S. Mitsui et al., *Chem. Pharm. Bull.* 1976, 24, 2377) and to be a potent inhibitor of the tumor promoter-induced Epstein-Barr virus activation (see A. Kondo et al., *Biosci. Biotech. Biochem.* 1993, 57, 1344). H. Mori et al., *Nippon Shokuhin Kagaku Kogaku Kaishi* 1995, 42, 989, described that 1'-acetoxychavicol acetate is an aroma constituent of *galanga* as determined by GC olfactometry, i.e. they determined only the retronasal aroma by GC sniffing without having tested the trigeminal effect of this constituent.

Surprisingly, it has now been found that 1'-acetoxychavicol acetate and 1'-acetoxyeugenol acetate and derivatives thereof exhibit a strong trigeminal effect which causes a warm/hot, spicy and pungent sensation perceived upon tasting any form of spice which is related to Galangal.

According to the invention 1'-acetoxychavicol acetate, 1'-acetoxyeugenol acetate and related compounds of formula I 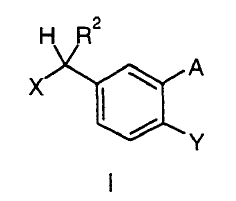 wherein
A = H, OR⁴
X = OH, OCOR¹
Y = H, OCOR³
and
- R¹, R³ =: H, branched or unbranched C₁₋₆ alkyl, C₂₋₆ alkenyl, C₂₋₆ alkinyl,
- R² =: H, branched or unbranched, substituted or unsubstituted C₁₋₆ alkyl, C₂₋₆ alkenyl, C₂₋₆ alkinyl, C₃ - C₆ carbocycle,
- R⁴ =: branched or unbranched C₁₋₆ alkyl, C₂₋₆ alkenyl, C₂₋₆ alkinyl,
are used as flavor or flavor component for exhibiting warm/hot, spicy and pungent sensations related to Galangal.

The effect is somewhat similar to those elicited by capsaicin and other capsaicinoids derived from hot peppers, by piperine derived from black pepper, by gingerols derived from ginger and by isothiocyanates derived from mustard. However, all the latter compounds impart usually long-lasting sensations which are very often undesirable, especially if spicy foods are consumed with more delicately flavored food and/or drink, e.g. with red wine. In contrast thereto the compounds according to the invention surprisingly produce a pungency of relatively short duration, which makes them ideal for flavoring foods where a lingering effect is undesirable.

Further surprising is that the above described compounds according to the invention have a warming, alcohol-boosting effect in alcoholic beverages, e.g. making a beverage containing about 15% alcohol taste like one containing about 30% alcohol.

The compounds of formula I may be used in either enantiomeric form, in any ratio of enantiomers or in racemic form.

Thus, the compounds described exhibit Galangal related effects of warm/hot, spicy and pungent sensations to food products, beverages and consumer healthcare products, e.g. mayonnaise, sour cream, onion dip, vegetable dip, potato chip snack, chewing gum, hard candy, mouthwash, toothpaste, etc. Formulations, compositions and processes for making such products are conventional and well known to a person skilled in the art.

In this respect the compounds listed in Table I are new.

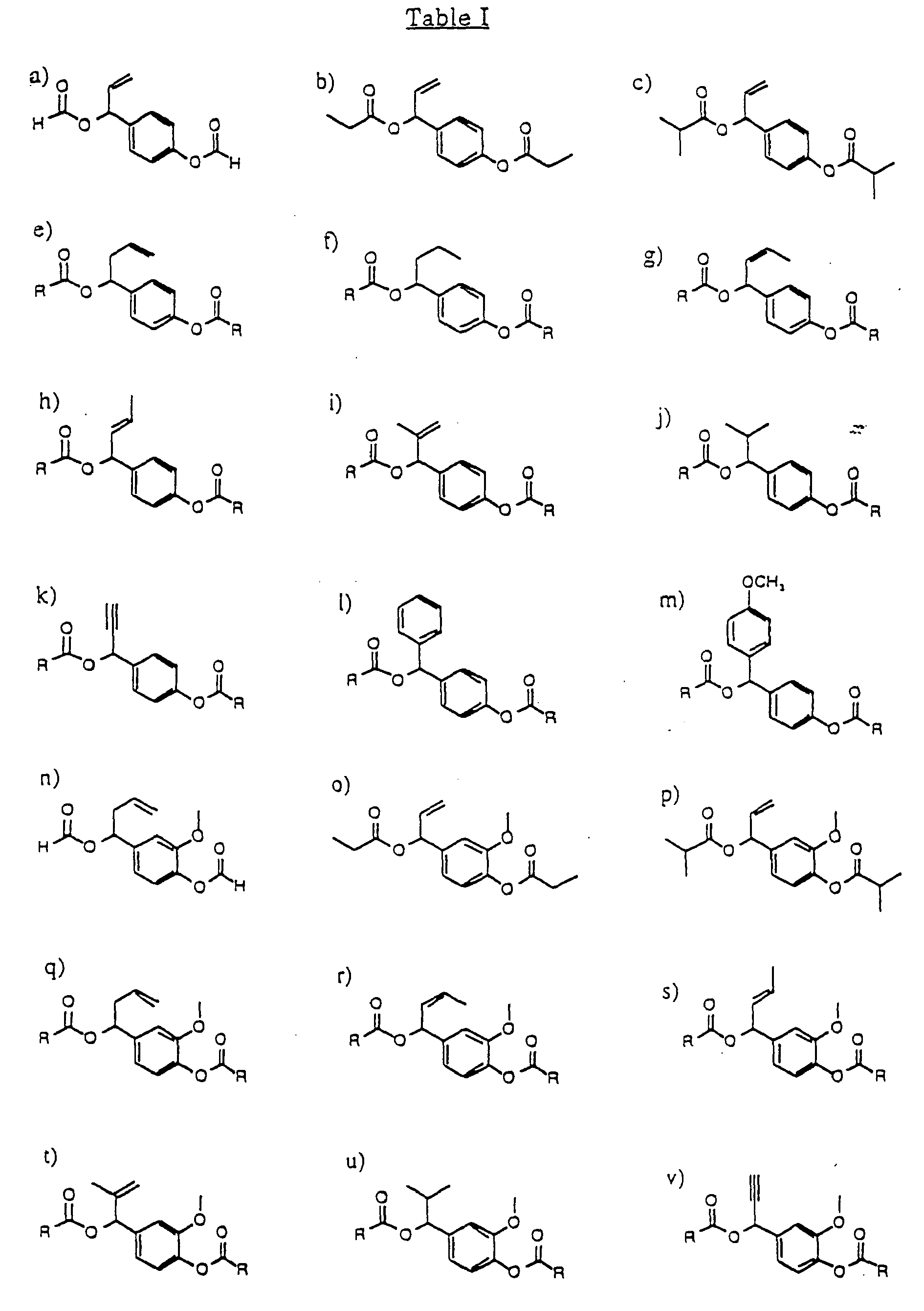

wherein R is H, CH₃, CH₂CH₃, or CH(CH₃)₂.

All these compounds exhibit the above mentioned warm/hot, spicy and pungent sensations and are preferred. The most preferred compounds for the use as flavor or as a flavor component are listed in Table II.

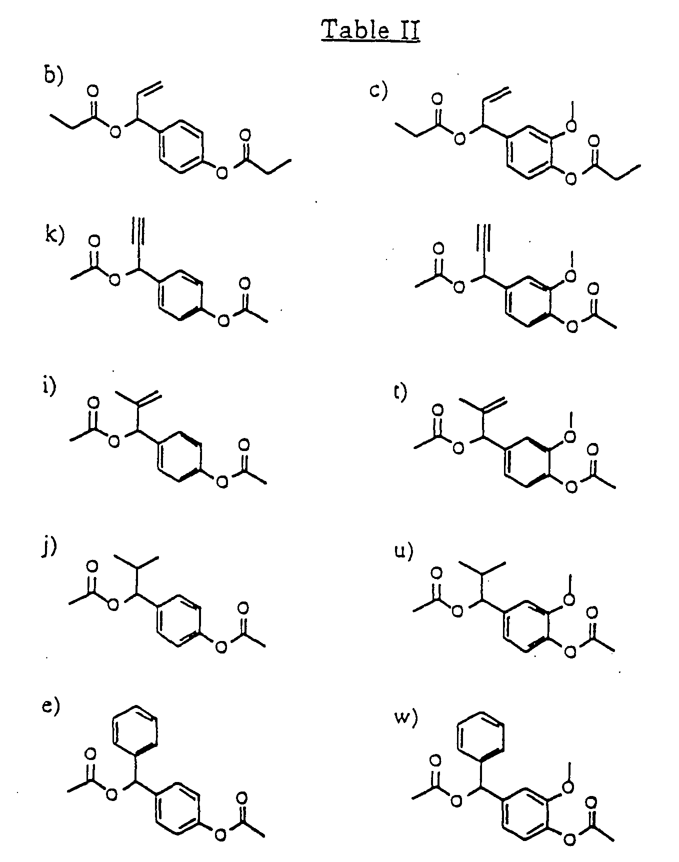

Thus, according to the invention a flavor composition contains at least one synthetically prepared compound of formula I and exhibits warm/hot, spicy and pungent sensations related to Galangal. The flavor compositions might be nature identical or not whereby the nature identical flavor compositions are preferred. The compounds of formula I, preferably those of Table I, more preferably those of Table II, might be used to generate the above mentioned effects in a variety of food, beverages or consumer healthcare products, e.g. in hard candy, chewing gum, mayonnaise, sour cream, onion and other vegetable dips, potato chip snack, alcoholic cordial, mouthwash and toothpaste. The compounds of formula I do not suffer the serious disadvantage of lingering hotness and other negative effects characteristic of existing food ingredients like capsaicin, gingerol and piperine.

Further, the appropriate compounds can be readily prepared by methods known to those skilled in the art. The preferred method for the preparation of compounds of formula I involves the following steps a) to d):
a) A halo-alkane-, alkene-, or alkine of type R²X, where X is a halogen atom and R² has the above defined meaning, is reacted with magnesium to form a Grignard reagent of type R²MgX. The reaction with magnesium is preferably carried out in tetrahydrofuran (THF), however, other solvents such as diethyl ether may also be used. The ratio of magnesium to halo-alkane-, alkene-, or alkine R²X is preferably from 1 up to about 5 moles of magnesium per mole of R²X, more preferably, from 2 up to 3 moles of magnesium per mole of R²X. The reaction is carried out at a temperature from 10° C up to about 50° C, preferably at a temperature from 40° C up to about 50° C. Temperatures lower than 20° C give rise to a reaction which is too slow to be economical. Temperatures higher than 50° C give rise to side reactions causing an undue lowering of yield of product.
b) The Grignard reagent of type R²MgX produced in step a) is then reacted with a benzaldehyde derivative. The mole ratio of R²X prepared in step a) to benzaldehyde is from about 2 up to about 6 moles of R²X used per mole benzaldehyde derivative, more preferably from 3 up to 5 moles of R²X per mole of benzaldehyde derivative. The aldehyde may be added to the Grignard reagent in neat form or dissolved in an inert solvent such as tetrahydrofuran and diethyl ether, most preferably the benzaldehyde derivative is added in form of a tetrahydrofuran solution. The reaction is carried out at a temparature of between -20° and up to 50°, preferably at about 30°C. The reaction mixture may be hydrolized with mineral acid, e.g. hydrochloric acid, sulfuric acid, or with saturated ammonium salt solutions, e.g. ammonium chloride or ammonium sulfate. Most preferably ammonium chloride is used for the hydrolysis. The Grignard reaction products may be purified by a chromatography method or may be used in crude form for the next step.
c) The Grignard addition products are finally acylated to give the desired compounds of formula I. The acylation may be carried out in a tertiary amine such as pyridine, triethyl amine, preferably pyridine. Most preferably pyridine is used in combination with a catalytic amout of 4-N,N-dimethylaminopyridine. As acylating agents acid chlorides or acid anhydrides may be used, preferably the acid anhydrides are used.

The compounds of formula I may preferably be purified by chromatography or by crystallization methods.

An alternative method of preparing compounds of the formula I involves the following steps:
a) An alkyl-, alkenyl-, or alkinyl metal derivative of type R²M, where R² has the above defined meaning and M represents an alkali metal (e.g. Li, Na, K), is reacted with the corresponding benzaldehyde derivative. Alkyl-, alkenyl-, or alkinyl metal derivative of type R²M are commercially available or may be readily prepared by methods known to those skilled in the art. The ratio of R²M to benzaldehyde derivative is preferably from 2 up to 5 moles of R²M per mole benzaldehyde derivative. The reaction is carried out in an inert solvent such as tetrahydrofuran (THF), diethyl ether, benzene and xylenes. The aldehyde may be added to the R²M reagent in neat form or dissolved in an inert solvent such as tetrahydrofuran and diethyl ether, most preferably the benzaldehyde derivative is added in form of a tetrahydrofuran solution. The reaction is carried out at a temparature of between -20° and 50°, preferably at about 30°C. The reaction mixture may be hydrolized with mineral acid, e.g. hydrochloric acid or sulfuric acid, or with saturated ammonium salt solutions, e.g. ammonium chloride or ammonium sulfate. Most preferably ammonium chloride is used for the hydrolysis. The reaction products may be purified by chromatography or may be used in crude form for the next step.
b) The addition products of R²M to the benzaldehyde derivatives are finally acylated to give the desired compounds of the formula I. The acylation may be carried out in a tertiary amine such as pyridine, triethyl amine, preferably pyridine is used as the solvent, most preferredly pyridine and a catalytic amout of 4-N,N-dimethylaminopyridine is used. As acylating agents acid chlorides or acid anhydrides may be used, preferably the acid anhydrides are used.

The products of formula I may be purified by chromatography or by crystallization.

The following examples 1-16 are presented for purposes of illustration of the general procedure for the preparation of compounds of formula I and are not to be construed in a limiting sense.

### Example 1

### (rac)-acetic acid 1-(4-acetoxy-phenyl)-allyl ester (1)

A 2.5 1 sulfonation flask equipped with stirrer, thermometer, reflux condenser, addition funnel and bubble counter connected to an argon flask is charged with 92.2 g Mg turnings, (4.0 mol) and 150 ml THF. After the system has been flushed with argon one iodine crystal is added followed by 30 drops of a solution of 192.6 g vinyl bromide (1.8 mol) in 300 ml THF. Using an oil bath, the reaction flask is heated to 70° and one drop of bromine is added. After ignition of the Grignard-reaction the oil bath is removed and the vinyl bromide-THF solution is added steadily at ambient temperature over a period of 6 hours. Stirring is continued for another 30 minutes and the obtained cloudy, black-grey mixture is cooled to 0° with an ice bath. After dilution with 600 ml THF, a solution of 61.05 g 4-hydroxy-benzaldehyde (0.5 mol) in 150 ml THF is added under efficient cooling (ice bath) over a period of 30 minutes. The obtained thick, but stirrable suspension is stirred at room temperature overnight and then cooled to 0° C. Under vigorous stirring a solution of 133.7 g NH₄Cl (2.5 mol) in 350 ml H₂O is added very carefully over a period of 1.5 hours. The obtained suspension is stirred for another 1.5 hours, the precipitated solids are separated by filtration and the reaction vessel is rinsed several times with a total of 600 ml MTBE. The combined organic layers are washed 2x with 500 ml water, 2x with 500 ml aq. NaHSO₃ (10%), 2x with 500 ml H₂O, 1x with 500ml satd. NaHCO₃ and 2x with 500 ml brine/water ca 2:1. Each aqueous phase is extracted 1x with 500 ml MTBE, the combined organic phases are dried over MgSO₄ and concentrated *in vacuo.* The crude product is purified by flash chromatography (silica gel 60, Merck Flash; 30 cm column with 7.5 cm diameter; solvent: hexane/MTBE 1:1) to give 56.0 g (75%) 4-(1-hydroxyallyl)-phenol in form of a yellowish, viscuous oil that slowly crystallizes.

A11 sulfonation flask equipped with stirrer, thermometer, reflux condenser, addition funnel and bubble counter connected to an argon flask is charged with 56.0 g diol and 70.5 ml acetic anhydride. Under stirring and cooling with an ice bath 105.4 ml pyridine (1.31 mol) is added over 15 minutes at such a rate that the temperature does not exceed 30° C. The ice bath is removed, stirring is continued for 15 min. at room temperature and then 0.41 g DMAP (3.4 mmol) is added. The mixture is stirred at r.t. for 21 hours, transferred to a separatory funnel, diluted with 500 ml MTBE and finally washed 2x with each 300 ml H₂O, 2x with each 200 ml 2N HCl (1.2 mol) and some ice, 1x with 300 ml H₂O, 2 with each 300 ml aq. NaHSO₃ (10% by weight), 1x with 300 ml H₂O, 1x with 300 ml saturated NaHCO₃ and 2x with each 300 ml brine/water ( about 1:1). Each aqueous phase is extracted 1x with 500 ml MTBE, the combined organic phases are dried over MgSO₄ and concentrated in vacuo. The crude oil is dissolved in 20 ml toluene and 45 ml hexane under warming, the solution is cooled to room temperature, inoculated with a crystal of pure material and stored in the refrigerator (4°C) overnight. The formed crystals are separated, washed with 200 ml ice cold hexane and dried to give 56.8 g (66% by weight) 1'-acetoxychavicol acetate 1.
¹H NMR (CDCl₃): 2.10 (*s*, CH₃); 2.30 (*s*, CH₃); 5.21-5.35 *(m,* 2H, CH₂); 5.90-6.07 *(m,* 1H, CH); 6.27 *(d, J =* 5.5, 1H, CH); 7.08 *(d, J =* 9.0, 2 aromatic H); 7.38 (*d*, *J =* 9.0, 2 aromatic H). MS: 234 (2, [M⁺]), 192 (28), 150 (61), 132 (71), 43 (100).

### Example 2

### (rac)-acetic acid 1-(4-acetoxy-3-methoxyphenyl)-allyl ester (2)

According to the general procedure 97.2 g (4 mol) Mg turnings, 192.6 g (1.8 mol) vinyl bromide and 76.05 g (0.5 mol) vanillin are reacted to give 92.5 g crude diol. Acetylation of this material using 97.0 ml (1.03 mol) Ac₂O, 145 ml pyridine and 560 mg DMAP gave 85.7 g (63% by weight) of pure compound 2 in form of a yellowish solid.
¹H NMR (CDCl₃): 2.12 (*s*, CH₃); 2.31 (*s*, CH₃); 3.83 (*s*, OCH₃); 5.22-5.38 (*m*, 2H, CH₂); 5.90-6.08 (*m*, 1H, CH); 6.25 *(d, J =* 5.5, 1H, CH); 6.90-7.05 (*m*, 3 aromatic H). MS: 264 (6, [M⁺]), 222 (43), 180 (100), 162 (70), 43 (69).

### Example 3

### (rac)-propionic acid 1-(4-propionoxy-3-methoxyphenyl)-allyl ester (3)

Esterification of 1.8 g (10 mmol) 4-(1-hydroxy-allyl)-2-methoxy-phenol with 2.6 ml (20 mmol) propionic anhydride and 10.8 mg DMAP in 2.8 ml pyridine, according to the general procedure known per se, gave 2.68 g (92% by weight) of compound 3 in form of a colorless oil.
¹H NMR (CDCl₃): 1.16 *(t, J* = 7.5, CH₃); 1.27 (*t*, *J* = 7.5, CH₃); 2.40 *(q, J* = 7.5, CH₂); 2.61 (*q, J =* 7.5, CH₂); 3.83 (*s*, OCH₃); 5.21-5.36 (*m*, 2H, CH₂); 5.90-6.08 (*m*, 1H, CH); 6.27 *(d, J =* 5.5, 1H, CH); 6.90-7.05 (*m*, 3 aromatic H). MS: 292 (3, [M⁺]), 236 (30), 180 (100), 162 (73), 57 (62).

### Example 4

### (rac)-propionic acid 1-(4-propionoxy-phenyl)-allyl ester (4)

Esterification of 1.0 g (6.65 mmol) 4-(1-hydroxy-allyl)-phenol with 1.7 ml (13.3 mmol) propionic anhydride and 7.2 mg DMAP in 1.9 ml pyridine according to the general procedure known per se gave 1.52 g (87% by weight) of compound 4 in form of a colorless oil.
¹H NMR (CDCl₃): 1.15 *(t, J* = 7.5, CH₃); 1.26 *(t, J* = 7.5, CH₃); 2.38 *(q, J* = 7.5, CH₂); 2.59 *(q, J* = 7.5, CH₂); 5.20-5.35 (*m*, 2H, CH₂); 5.90-6.08 (*m*, 1H, CH); 6.28 *(d, J =* 5.5, 1H, CH); 7.08 *(d, J =* 9.0, 2 aromatic H); 7.36 *(d, J =* 9.0, 2 aromatic H). MS: 262 (1, [M⁺]), 206 (34), 150 (90), 132 (100), 57 (84).

### Example 5

### (rac)-isobutyric acid 1-(4-isobutyryloxy-phenyl)-allyl ester (5).

Esterification of 1.5 g (10.0 mmol) 4-(1-hydroxy-allyl)-phenol with 3.3 ml (20.0 mmol) isobutyric anhydride and 20.3 mg DMAP in 2.8 ml pyridine according to the general procedure gave 2.4 g (83% by weight) of compound 5 in form of a colorless oil.
¹H NMR (CDCl₃): *1.17 (d, J* = 7.0, CH₃); 1.20 *(d, J* = 7.0, CH₃); 1.31 *(d, J* = 7.0, 2 CH₃); 2.60 *(m, J =* 7.0, 2 CH); 2.80 *(m, J =* 7.0, 2 CH); 5.20-5.35 *(m,* 2H, CH₂); 5.90-6.08 (*m*, 1H, CH); 6.26 *(d, J =* 6.0, 1H, CH); 7.07 *(d, J =* 9.0, 2 aromatic H); 7.37 *(d, J =* 9.0, 2 aromatic H). MS: 290 (0.5, [M⁺]), 220 (9), 150 (20), 71 (48), 43 (100).

### Example 6

### (rac)-acetic acid 1-(4-acetoxy-phenyl)-propyl ester (6)

According to the general procedure known per se 72.9 g (3 mol) Mg turnings, 160.5 g (1.5 mol) ethyl bromide and 61.05 g (0.5 mol) 4-hydroxy-benzaldehyde are reacted to give 71.1 g crude diol. Acetylation of 56 g of this material using 70 ml (0.74 mol) Ac₂O, 104.6 ml pyridine and 750 mg DMAP gave 58.2 g (63% by weight) of pure compound 6 in form of a white solid.
¹H NMR (CDCl₃): 0.88 *(t, J =* 7.0, CH₃); 1.70-2.00 (*m*, CH₂); 2.08 (s, CH₃); 2.30 (*s*, CH₃); 5.66 *(t, J =* 6.0, 1H, CH); 7.05 *(d, J =* 9.0, 2 aromatic H); 7.34 *(d, J =* 9.0, 2 aromatic H). MS: 236 (2, [M⁺]), 194 (15), 165 (22), 123 (70), 43 (100).

### Example 7

### (rac)-acetic acid 1-(4-acetoxy-3-methoxy-phenyl)-propyl ester (7).

According to the general procedure known per se 72.9 g (3 mol) Mg turnings, 160.5 g (1.5 mol) ethyl bromide and 76.05 g (0.5 mol) vanillin are reacted to give 98.2 g crude diol. Acetylation of 80 g of this material using 83.3 ml (878 mmol) Ac₂O, 124 ml pyridine and 890 mg DMAP gave 85.9 g (79% by weight) of pure compound 7 in form of a white solid.
¹H NMR (CDCl₃): 0.90 *(t, J =* 7.0, CH₃); 1.70-2.00 (*m*, 2H, CH₂); 2.09 *(s,* CH₃); 2.31 (*s*, CH₃); 3.85 (*s*, OCH₃); 5.65 *(t, J =* 6.0, 1H, CH); 6.87-7.03 *(m,* 3 aromatic H). MS: 266 (3, [M⁺]), 224 (23), 195 (12), 164 (17), 153 (72), 43 (100).

### Example 8

### (rac)-formic acid 1-(4-formyloxy-phenyl)-allyl ester (8).

Formylation of 1.0 g (6.6 mmol) 4-(1-hydroxy-allyl)-phenol with 2.4 g (26.6 mmol) formylation reagent (prepared from 2.7 g acetic anhydride, 1.2 g formic acid and 2 mg pyridine) in 3.3 ml of benzene gave 23.5 mg formate 8 after workup and flash chromatography.
¹H NMR (CDCl₃): 5.25-5.40 *(m,* 2H, CH₂); 5.90-6.08 (*m*, 1H, CH); 6.38 *(d, J* = 6.0, 1H, CH); 7.15 *(d, J =* 9.0, 2 aromatic H); 7.43 *(d, J =* 9.0, 2 aromatic H); 8.15 (*s*, HCO); 8.30 (*s*, HCO). MS: 206 (10, [M⁺]), 179 (18), 132 (62), 105 (42), 77 (100).

### Example 9

### (rac)-acetic acid 1-(4-acetoxyphenyl)-3-butenyl ester (9).

According to the general procedure known per se 182.2 g (7.5 mol) Mg turnings, 302.4 g (2.5 mol) allyl bromide and 61.1 g (0.5 mol) 4-hydroxy-benzaldehyde are reacted to give 24.4 g crude diol (containing 43% by weight starting material). Acetylation of this material using 32.3 ml (340 mmol) Ac₂O, 48.3 ml pyridine and 348.0 mg DMAP gave 12.3 g (10% by weight) of pure compound 9 in form of a yellowish oil after chromatography.
¹H NMR (CDCl₃): 2.06 (*s*, CH₃); 2.30 (*s*, CH₃);2.45-2.73 (*m*, 2H, CH₂); 5.02-5.14 (*m*, 2H); 5.58-5.85 (*m*, 2H); 7.05 *(d, J =* 9.0, 2 aromatic H); 7.35 (*d*, *J =* 9.0, 2 aromatic H). MS: 248 (0.1,[M⁺]), 207 (21), 165 (48), 123 (98), 43 (100).

### Example 10

### (rac)-acetic acid 1-(4-acetoxyphenyl)-2-propynyl ester (10).

To a 30-35° warm suspension of sodium acetylide in xylene (60.0 g, 12%) is added a solution of 6.1 g 4-hydroxybenzaldehyde in 20 ml THF. The reaction mixture is stirred at r.t. for 4 days. Workup following the general procedure gave 480 mg (6.5% by weight) diol in form of a yellowish solid. Acetylation of 200 mg (1.3 mmol) of this material with 0.26 ml (2.7 mmol) Ac₂O, 0.4 ml pyridine and 2.7 mg DMAP gave 200 mg (64% by weight) of pure compound 10 in form of a colorless oil.
¹H NMR (CDCl₃): 2.12 (*s*, CH₃); 2.31 (*s*, CH₃); 2.66 *(d, J=* 1.5, CH); 6.45 (*d, J* = 1.5, CH); 7.12 *(d, J =* 9.0, 2 aromatic H); 7.57 *(d, J* = 9.0, 2 aromatic H). MS: 232 (5, [M⁺]), 190 (12), 148 (22), 130 (100), 43 (89).

### Example 11

### (rac)-acetic acid 1-(4-acetoxyphenyl)-2-methyl-allyl ester (11).

According to the general procedure 12.15 g (0.5 mol) Mg turnings, 30.2 g (0.25 mol) bromopropene and 6.1 g (0.05 mol) 4-hydroxy-benzaldehyde are reacted to give 7.5 g crude diol. Acetylation of 2.0 g of this material using 2.3 ml (24.4 mmol) Ac₂O, 3.4 ml pyridine and 25.0 mg DMAP gave 2.6 g (78% by weight) of pure compound 11 in form of a colorless oil.
¹H NMR (CDCl₃): 1.62 *(s,* CH₃); 2.12 (*s*, CH₃); 2.30 (s, CH₃); 4.98 *(s,* 1H, CH₂); 5.11 *(s,* 1H, CH₂); 6.17 (*s*, 1H, CH); 7.06 *(d, J =* 9.0, 2 aromatic H); 7.36 *(d, J =* 9.0, 2 aromatic H). MS: 248 (1, [M⁺]), 206 (35), 164 (40), 146 (57), 43 (100).

### Example 12

### (rac)-acetic acid 1-(4-acetoxy-3-methoxyphenyl)-ethyl ester (12).

According to the general procedure 14.58 g (0.6 mol) Mg turnings, 42.6 g (0.3 mol) iodomethane and 15.22 g (0.1 mol) vanillin are reacted to give 14.1 g crude diol. Acetylation of 3.0 g of this material using 3.4 ml (35.7 mmol) Ac₂O, 5.0 ml pyridine and 36.0 mg DMAP gave 3.5 g (65% by weight) of pure compound 12 in form of a yellowish oil.
¹H NMR (CDCl₃): 1.52 *(d, J =* 7.0, CH₃); 2.07 (*s*, CH₃); 2.30 (*s*, CH₃); 3.84 *(s,* OCH₃); 5.87 *(q, J =* 7.0, 1H, CH); 6.90-7.04 *(m,* 3 aromatic H). MS: 252 (8, [M⁺]), 210 (93), 168 (40), 150 (85), 43 (100).

### Example 13

### (rac)-acetic acid 1-(4-acetoxy-3-methoxyphenyl)-2-methyl-allyl ester (13).

According to the general procedure 14.58 g (0.6 mol) Mg turnings, 36.3 g (0.3 mol) 2-bromo-propene and 15.22 g (0.1 mol) vanillin are reacted to give 20.78 g crude diol. Acetylation of 5.0 g of this material using 4.9 ml (51.5 mmol) Ac₂O, 7.3 ml pyridine and 52.4 mg DMAP gave 5.84 g (82% by weight) of pure compound 13 in form of a yellowish oil.
¹H NMR (CDCl₃): 1.66 (*s*, CH₃); 2.12 (*s*, CH₃); 2.30 (*s*, CH₃); 3.82 (*s*, OCH₃); 4.98 (*s*, 1H, CH₂); ); 5.11 (*s*, 1H, CH₂); 6.05 (*s*, 1H, CH); 6.90-7.02 (*m*, 3 aromatic H). MS: 278 (7, [M⁺]), 236 (54), 194 (100), 176 (75), 43 (96).

### Example 14

### (rac)-acetic acid 1-(4-acetoxy-3-methoxyphenyl)-2-methyl-propyl ester (14)

1.0 g (3.6 mmol) diacetate 13 is dissolved in 17 ml EtOH and hydrogenated over PtO₂. The catalyst is removed by filtration over Celite and the solvent is evaporated. Flash chromatography of the crude product gave 0.83 g (82% by weight) of compound 14 in form of a yellowish oil.
¹H NMR (CDCl₃): 0.81 *(d, J* = 7.0, CH₃); 0.98 *(d, J* = 7.0, CH₃); 1.98-2.15 *(m,* 1H, CH); 2.08 (*s*, CH₃); 2.30 (*s*, CH₃); 3.82 (*s*, OCH₃); 5.46 *(d, J =* 7.0, CH); 6.84-7.02 (m, 3 aromatic H). MS: 280 (8, [M⁺]), 238 (38), 195 (56), 153 (100), 43 (68).

### Example 15

### (rac)-acetic acid 4-(1-acetoxy-butyl)-phenyl ester (15).

1.0 g (4 mmol) diacetate 9 is dissolved in 19 ml EtOH and hydrogentated over 50 mg PtO₂. The catalyst is removed by filtration over Celite and the solvent is evaporated. Flash chromatography of the crude product gave 0.92 g (91% by weight) of compound 15 in form of a yellowish oil.
¹H NMR (CDCl₃): 0.92 *(t, J =* 7.0, CH₃); 1.15-1.45 (*m*, 2H, CH₂); 1.62-2.00 (*m*, 2H, CH₂); 2.05 (s, CH₃); 2.30 (*s*, CH₃); 5.74 *(t, J =* 7.0, CH); 7.06 *(d, J=* 9.0, 2 aromatic H); 7.34 *(d, J =* 9.0, 2 aromatic H). MS: 250 (2, [M⁺]), 208 (19), 165 (32), 123 (68), 43 (100).

### Example 16

### (rac)-acetic acid 4-(acetoxy-phenyl-methyl)-2-methoxy-phenyl ester (16).

According to the general procedure 7.3 g (0.3 mol) Mg turnings, 23.6 g (0.15 mol) bromo-benzene and 7.6 g (0.05 mol) vanillin are reacted to give 7.5 g (65% by weight) diol after crystallization. Acetylation of 3.0 g (13 mmol) of this material using 2.7 ml (28.5 mmol) Ac₂O, 3.8 ml pyridine and 50 mg DMAP gave after crystallization 1.13 g (28% by weight) of pure compound 16 in form of white crystals.
¹H NMR (CDCl₃): 2.15 (*s*, CH₃); 2.29 (*s*, CH₃); 3.78 (*s*, CH₃); 6.85-7.05 (*m*, 4 aromatic H); 7.45 (*s*, 5 aromatic H); MS: 314 (17, [M⁺]), 272 (68), 212 (100), 152 (15), 105 (12), 43 (100).

The compounds of formula I have been tested for their capability to impart warm/hot, spicy and pungent sensations to the oral cavity by preparing an aqueous solution at concentrations ranging from 10 to 2000 ppm, preferably at a concentration of 100 ppm, and evaluation of the solution by an expert panel consisting of 4 persons.

Compounds of formula I exhibit a nice warm/hot, spicy and pungent sensation at concentrations ranging from 10 to 2000 ppm. Normally this sensation is perceived after a delay time ranging from 5 to about 60 seconds after tasting, depending on the panelist.

After removal of the test solution from the oral cavity the warm/hot spicy and pungent sensation disappears within a short time (individually from a few seconds to about half a minute). In contrast to compounds such as capsaicin, piperine and gingerol no lingering of the hot/warming, spicy and pungent sensation was observed.

The hot/warm, spicy and pungent sensation imparted by the compounds of formula I is perceived in the oral cavity on locations different from the locations where the pungency of capasaicin is perceived.

In addition, use of the compounds of formula I has been tested in foods, beverages and consumer healthcare products. Compounds of formula I were added to these products at concentrations ranging from 100 to 2000 ppm, preferably at a concentration of 500 ppm and were evaluated by an expert panel consisting of 4 persons. Accordingly, a warm/hot, spicy and pungent sensation was imparted to these products, as exemplified below.

### Example 17

A stock solution containing 1% by weight of the active ingredient compound of formula I in 1,2-propylene glycol (flavor quality) was prepared. Gentle heating was applied to solubilize the active ingredient. Then 0.5 g of this stock solution was submerged in 50 g of water containing 1% by weight of ethyl alcohol. The solution thus prepared, containing 100 ppm of the active ingredient of formula I, was evaluated by the expert panel. A warm/hot, spicy and pungent sensation was perceived after a delay time of 5 to about 60 seconds.

### Example 18

50 Proof cordial base was prepared by mixing medium invert sugar (30 parts), glycerine (1 part), ethyl alcohol 190 (26.3 parts) and water (42.7 parts); cordial base was then flavored with cinnamon flavor at 0.2% by weight (cinnamon flavors used are commercially available from Givaudan Roure Flavors) and 100 ppm of compound 7 as described and prepared according to example 17. A cordial base having enhanced warm/hot, pungent flavor was obtained.

### Example 19

Mouthwash base was prepared by mixing 0.08 parts mouthwash flavor (commercially available from Givaudan Roure Flavors Ltd.), 0.5 parts Pluronic F-127, 0.5 parts polysorbate 20, 0.35 parts sodium lauryl sulfate, 5 parts glycerine, 0.015 parts sodium saccharin and 93.555 parts water. The mouthwash base was blended separately with 100 ppm of each of the compounds 1, 3, 4, 5, 6, 7 and 9, respectively, as described and prepared according to the examples. The mouthwash bases imparted a warm/hot, spicy and pungent sensation.

### Example 20

Toothpaste base (Opaque 13/02-5F) was flavored with peppermint flavor (Givaudan Roure peppermint flavor 10570-34) at 0.5% by weight. The toothpaste base was blended separately with 100 ppm of each of the compounds 1, 6, 7 and 9, respectively, as described and prepared according to the examples 1, 6, 7 and 9. The toothpaste bases had a warm/hot, spicy and pungent character.

### Example 21

Mayonnaise base was prepared by mixing 59.8 parts whole egg, 24 parts vinegar (white, 5% acidity), 1.3 parts mustard, 2 parts sugar, 1 part salt and 219 parts vegetable oil. The mayonnaise base was blended with 500 ppm of each of the compounds 1, 6, 7 and 9, respectively, as described and prepared according to the examples 1, 6, 7 and 9. The mayonnaise bases had a warm/hot, spicy and pungent character.

### Example 22

500 ppm of compounds 1, 6, 7 and 9, respectively, were blended with regular fat sour cream. The sour creams had a warm/hot, spicy and pungent character without a lingering effect.

### Example 23

An onion dip was prepared by mixing a commercial package of onion soup mix (Lipton) with plain, regular fat sour cream and 1000 ppm of compound 9 as described and prepared according to example 9. The onion dip had a warm/hot, peppery and pungent character without a lingering effect.

### Example 24

A vegetable dip was prepared by mixing a commercial vegetable soup mix (Knorr, 1 package) with 470 ml plain, regular fat sour cream and 500 ppm of each of the compounds 1, 6, 7 and 9, as described and prepared according to the examples 1, 6, 7, and 9. The vegetable dip had a warm/hot, peppery and pungent character without any lingering effect.

### Example 25

2.5 parts Maltrin M-10 (commercially available) was mixed with 0.05 parts pizza flavor (SNE Pizza Flavor 810841). 50 parts Potato chips (Pringles) were placed on a paper plate and then microwaved for 30-60 seconds until surface oil glistened, before being transfered to ziploc bag where dusted with 1000 ppm of compound 6 as described and prepared according to example 6. The Pizza snack had a warm/hot, peppery and pungent character as described and prepared according to example 6.

### Example 26

A chewing gum was prepared according to methods known to those skilled in the art. Ingredients used were 240 g gum base (Canigo-T, Cafosa Gum SA., Barcelona), 200 g glucose syrup (DE 38-40, 43° Bé), 560 g icing sugar, 10 g citric acid, 7 g orange flavor (commerical by available from Givaudan Roure Flavor) and 1 g of compound 2 as described and prepared according to example 2. The orange flavored chewing gum had a warm/hot, peppery and pungent character, again without any lingering effect.

For example, the invention may relate to :
- Use of at least one synthetically prepared compound of the formula I 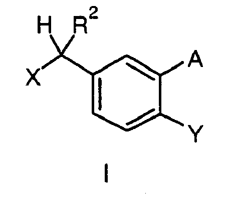 wherein
   A = H, OR⁴
   X = OH, OCOR¹
   Y = H, OCOR³
   and
   - R¹, R³ =: H, branched or unbranched C₁₋₆ alkyl, C₂₋₆ alkenyl, C₂₋₆ alkinyl,
   - R² =: H, branched or unbranched, substituted or unsubstituted C₁₋₆ alkyl, C₂₋₆ alkenyl, C₂₋₆ alkinyl, C₃ - C₆ carbocycle,
   - R⁴ =: branched or unbranched C₁₋₆ alkyl, C₂₋₆ alkenyl, C₂₋₆ alkinyl,
   as flavor or flavor component for exhibiting warm/hot, spicy and pungent sensations related to Galangal.
- A flavorant composition exhibiting warm/hot, spicy and pungent sensations related to Galangal comprising at least one compound of formula I as defined in claim 1.
- The flavorant composition of claim 2 wherein its flavor is nature identical.
- A compound of formula I as defined in claim 1 selected from the group consisting of 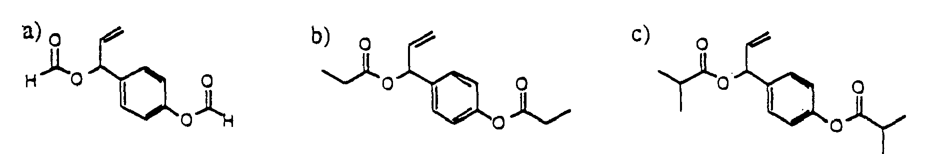 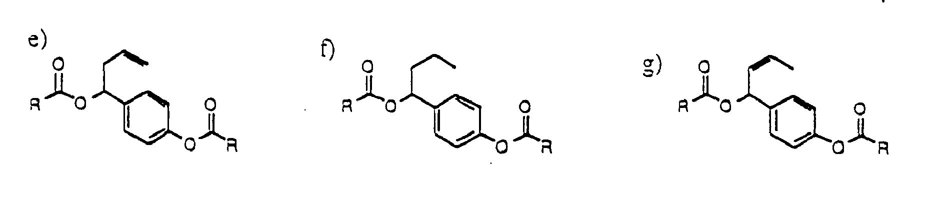 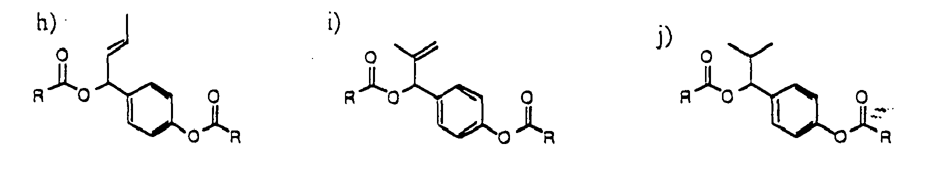 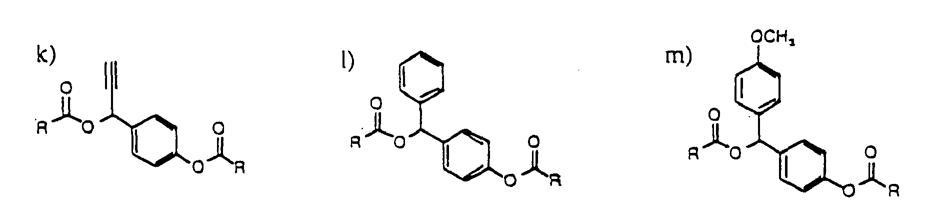 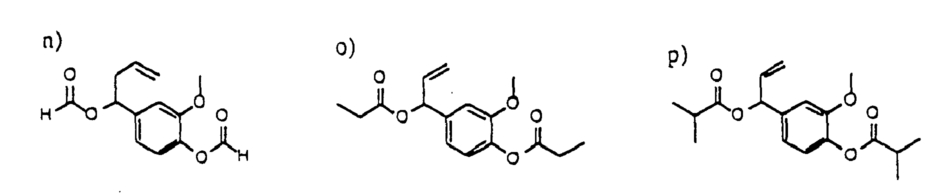 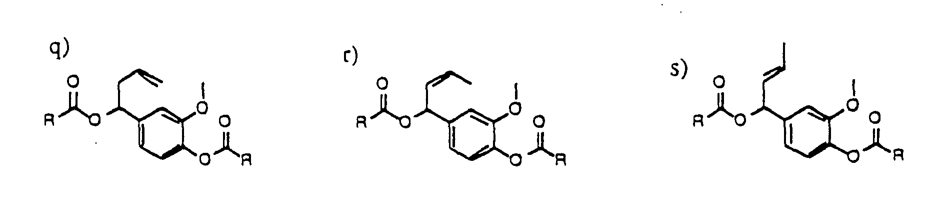 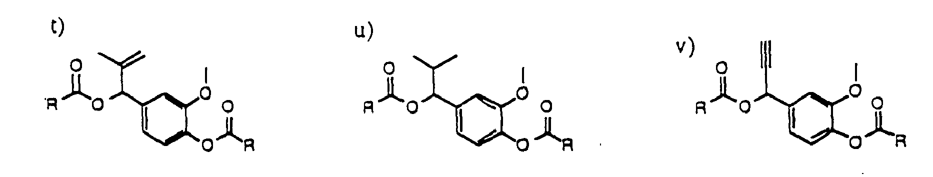 wherein R is H, CH₃, CH₂CH₃, or CH(CH₃)₂.
- A compound according to claim 4 selected from the group consisting of 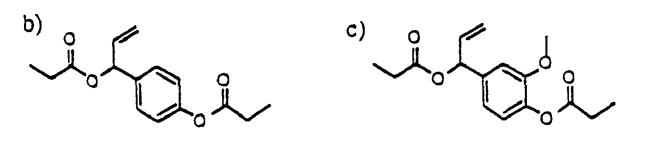 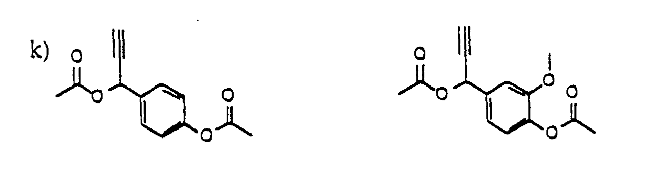 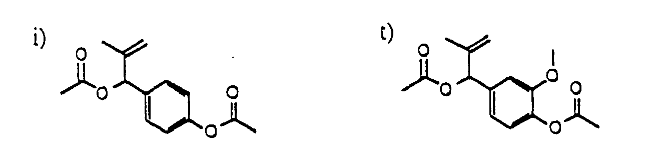 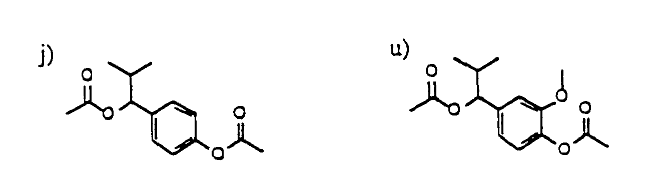 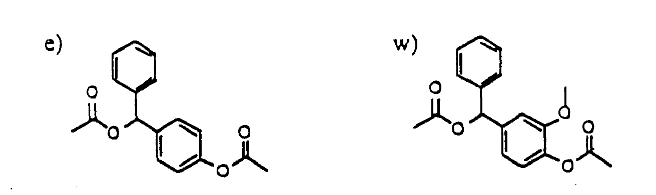
- Use of at least one compound of claim 4, especially of at least one compound of claim 5, in food, a beverage or a consumer healthcare product flavor for exhibiting warm/hot, spicy and pungent sensations related to Galangal.
- A flavorant composition containing at least one compound selected from the group as defined by claim 4, especially containing at least one compound selected from the group as defined by claim 5, exhibiting warm/hot, spicy and pungent sensations related to Galangal.
- Food, beverage or a consumer healthcare product containing at least one compound of formula I as defined in claim 1.
- Food, beverage or consumer healthcare product of claim 8 containing at least one compound selected from the group as defined by claim 4.
- Food, beverage or consumer healthcare product of claim 9 containing at least one compound selected from the group as defined by claim 5.
- The beverage according to any one of the claims 8 to 10, characterized in that it is an alcoholic drink.
- A compound selected from the group consisting of 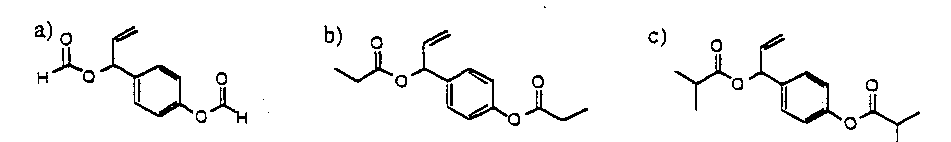 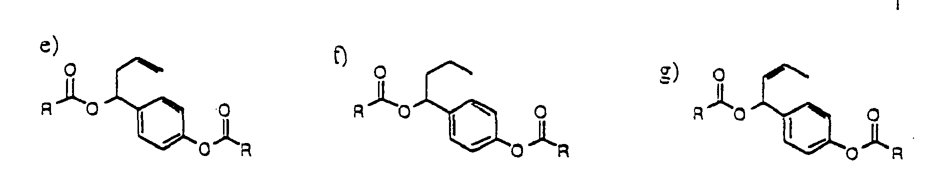 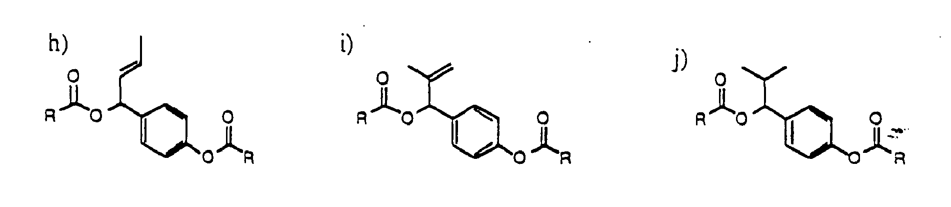 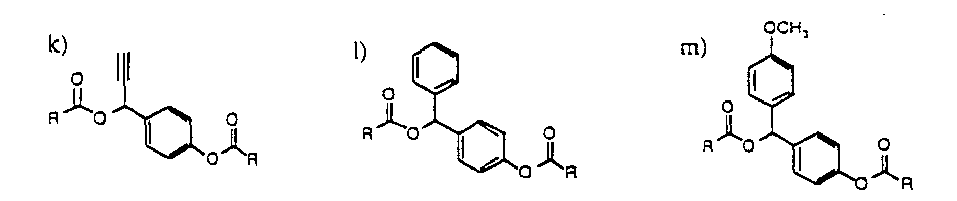 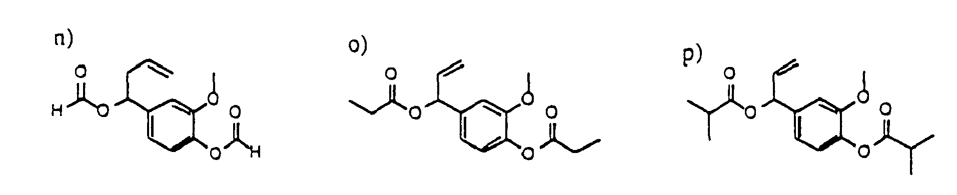 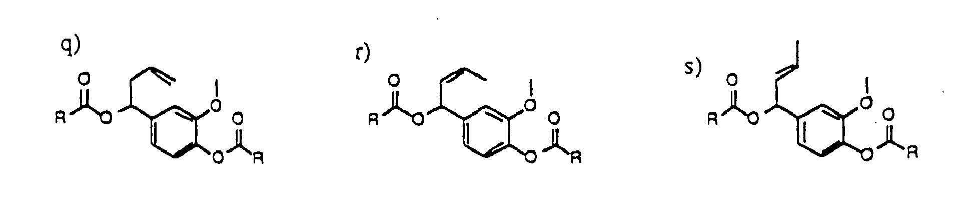 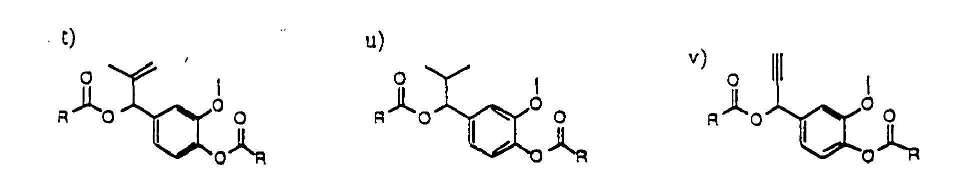 wherein R is H, CH₃, CH₂CH₃, or CH(CH₃)₂.
- A compound according to claim 12 selected from the group consisting of

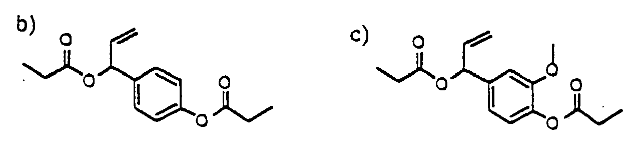

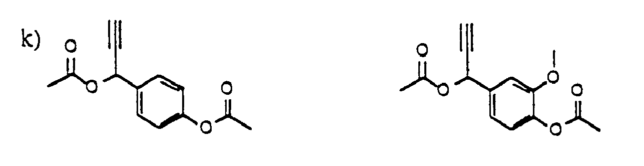

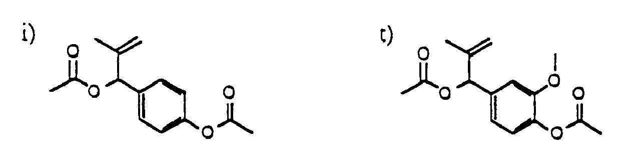

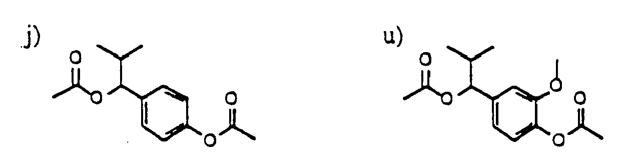

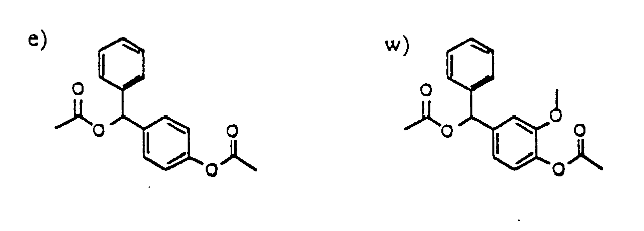

## Claims

1. A flavorant composition comprising at least one synthetically prepared compound of the formula I 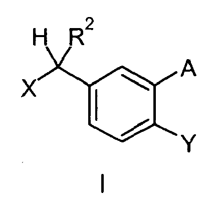 wherein
A = H, OR⁴
X = OCOR¹
Y = OCOR³
and
R¹, R³ = H, C₁₋₆ alkyl, C₂₋₆ alkenyl, C₂₋₆ alkinyl, branched or unbranched
R² = H, C₁₋₆ alkyl, C₂₋₆ alkenyl, C₂₋₆ alkinyl, branched or unbranched, C₃ - C₆ carbocycle, substituted or unsubstituted
R⁴ = C₁₋₆ alkyl, C₂₋₆ alkenyl, C₂₋₆ alkinyl, branched or unbranched
wherein the compound of formula I is selected from the group consisting of 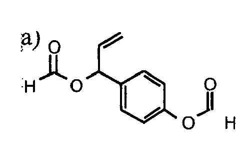 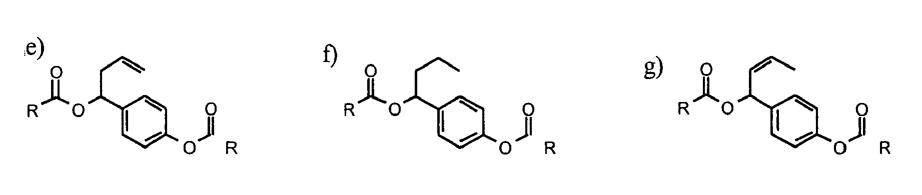 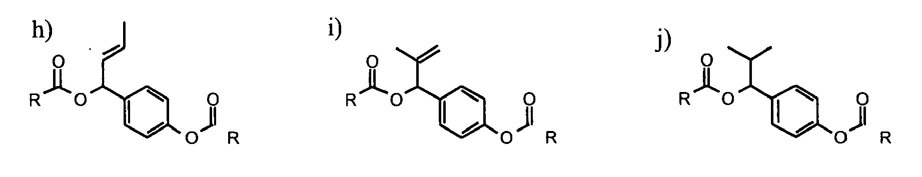 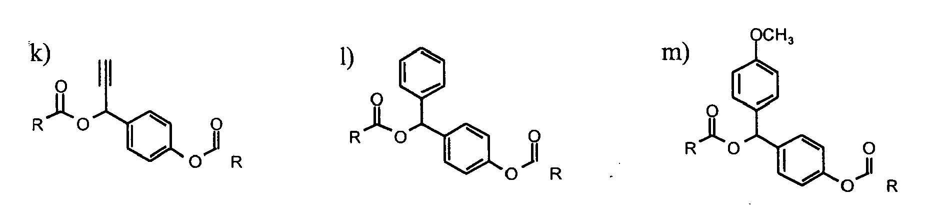 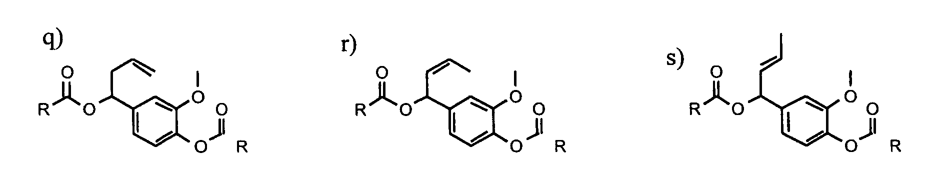 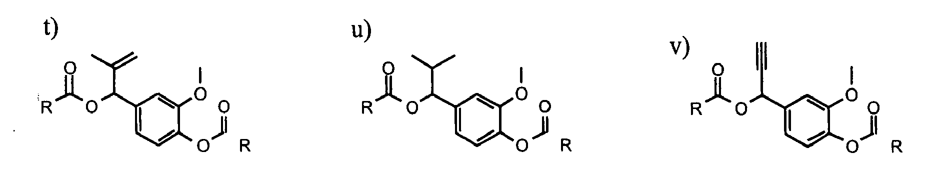 wherein R is H, CH₃, CH₂CH3, or CH(CH₃)₂.

2. A flavor composition according to claim 1 selected from the group consisting of

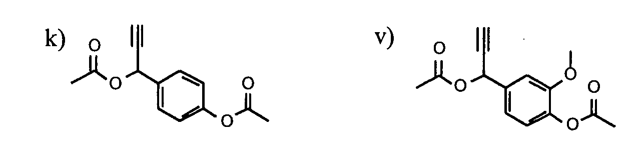

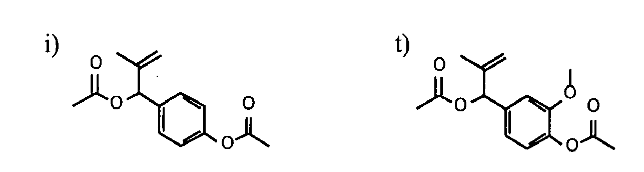

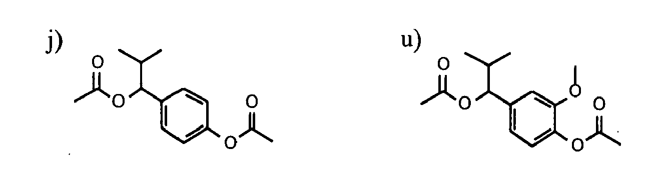

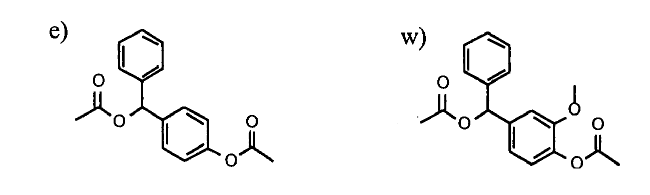

3. Food, beverage or consumer healthcare product containing at least one compound selected from the group consisting of

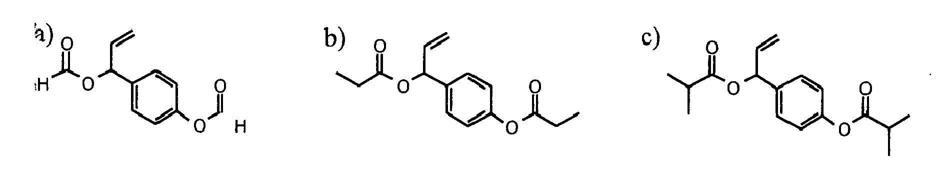

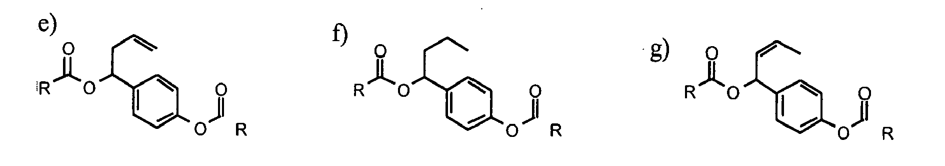

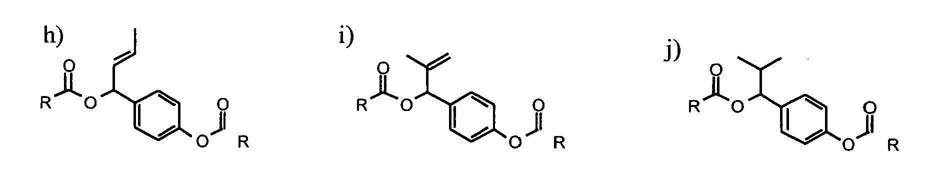

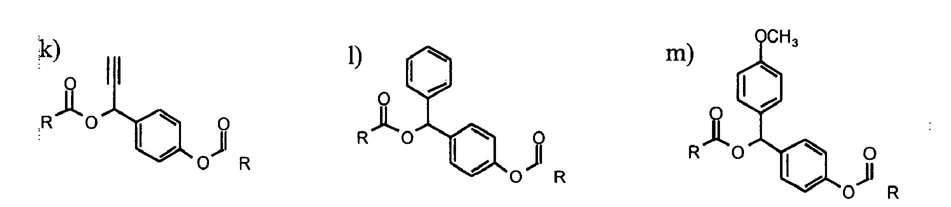

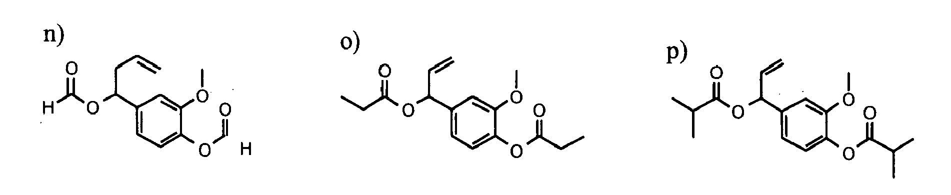

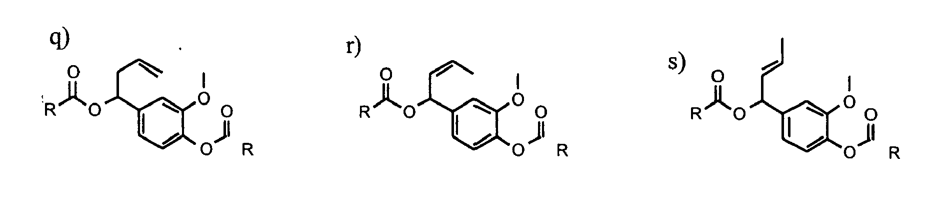

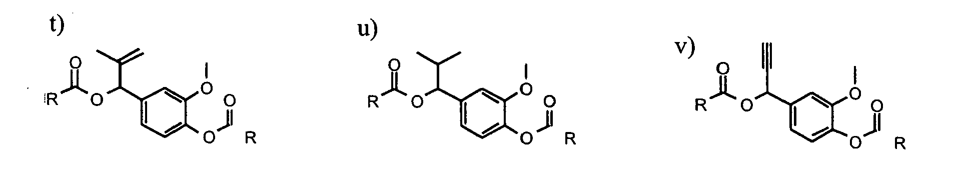

4. Food, beverage or consumer healthcare product containing at least one compound selected from the group consisting of

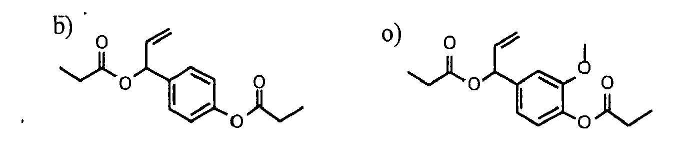

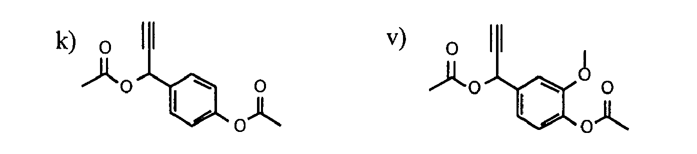

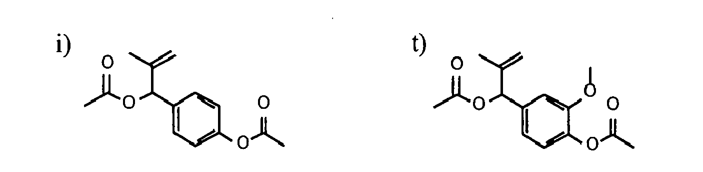

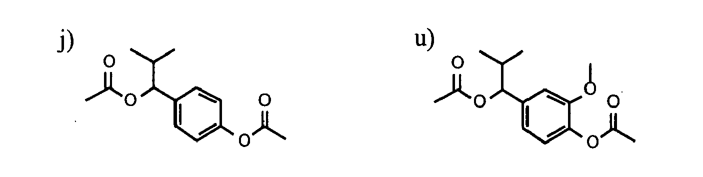

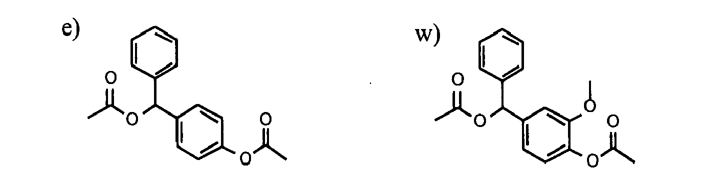

5. Beverage according to claim 3 or 4 which is an alcoholic drink.
